# EUROPEAN PATENT APPLICATION

(11) **EP 4 785 825 A1**
(43) Date of publication of application: **05.08.2026**
(21) Application number: 24886079.3
(22) Date of filing: 17.10.2024
(51) Int. Cl.: A45C 11/00, H04B 1/3888, A45C 13/00, H01F 7/02, A45C 15/00

(54) **ACCESSORY MODULE AND ELECTRONIC DEVICE INCLUDING SAME**

(30) Priority: 02.11.2023 KR 20230150142; 04.12.2023 KR 20230173081
(71) Applicant: Samsung Electronics Co., Ltd., Suwon-si, Gyeonggi-do 16677 (KR)
(72) Inventor: PARK, Bumsoo, Suwon-si Gyeonggi-do 16677 (KR); RYU, Jinie, Suwon-si Gyeonggi-do 16677 (KR)
(74) Representative: Gulde & Partner
(86) International application number: PCT/KR2024/015787
(87) International publication number: WO 2025/095404

(57) **Abstract**

An accessory module for an electronic device may comprise: a case to be mounted on the electronic device; and an accessory detachably attached to the case. The case may include: a cover body forming the outer surface of the case; an opening portion formed in the cover body; and a hook assembly disposed movably relative to the opening portion and including a first magnetic structure. The accessory may include: an accessory body; a mounting groove recessed from the accessory body so that the hook assembly can be mounted on the accessory; and a second magnetic structure disposed inside the accessory body and establishing mutual attraction with the first magnetic structure. In a state in which the accessory is mounted to the case, the position of the accessory can switch between a first position, at which the accessory is removable from the case, and a second position, at which the mounted state of the accessory to the case is fixed.

## Description

### TECHNICAL FIELD

The following description relates to an accessory module and an electronic device including the same.

### BACKGROUND ART

Electronic devices have become essential in modern society. Various types of cases having different shapes have been studied to improve the durability of electronic devices. An outer surface of a case may be provided with accessories configured to interact with the case. Accessories having various designs have been developed to enhance user convenience or aesthetics.

However, the foregoing description should not be construed as having been acknowledged as a prior art to the description set forth in the disclosure by the applicant but should be construed only as a related art to the invention described herein.

### DISCLOSURE OF THE INVENTION

### TECHNICAL SOLUTIONS

In an embodiment, an accessory module for an electronic device includes a case configured to be mounted to the electronic device and an accessory detachably connected to the case. The case may include a cover body forming an outer surface of the case, an opening formed in the cover body, and a hook assembly movably disposed relative to the opening and including a first magnetic structure. The accessory may include an accessory body, a mounting groove recessed in the accessory body such that the hook assembly is mounted to the accessory body, and a second magnetic structure disposed in the accessory body and configured to magnetically attract the first magnetic structure. When the accessory is mounted to the case, a position of the accessory may be switchable between a first position in which the accessory is separable from the case and a second position in which the accessory is fixed to the case.

In an embodiment, an electronic device includes a housing including a front surface, a rear surface opposite to the front surface, and a side surface surrounding an inner space between the front surface and the rear surface, a display disposed on the front surface and visually exposed to the outside, and an accessory module configured to be mounted to the electronic device. The accessory module may include a case configured to be mounted to the electronic device and an accessory detachably connected to the case. The case may include a cover body forming an outer surface of the case, an opening formed in the cover body, and a hook assembly movably disposed relative to the opening and including a first magnetic structure. The accessory may include an accessory body, a mounting groove recessed in the accessory body such that the hook assembly is mounted to the accessory body, and a second magnetic structure disposed in the accessory body and configured to magnetically attract the first magnetic structure. When the accessory is mounted to the case, a position of the accessory may be switchable between a first position in which the accessory is separable from the case and a second position in which the accessory is fixed to the case.

In an embodiment, an accessory module for an electronic device includes a case configured to be mounted to the electronic device and an accessory detachably connected to the case. The case may include a cover body forming an outer surface of the case, an opening formed in the cover body, a hook assembly movably disposed relative to the opening and including a first magnetic structure, and a guide magnetic structure disposed on the cover body and configured to apply a magnetic force to the accessory during mounting of the accessory to the case such that the position of the accessory may be aligned. The accessory may include an accessory body, a mounting groove recessed in the accessory body such that the hook assembly is mounted to the accessory body, and a second magnetic structure disposed in the accessory body and configured to magnetically attract the first magnetic structure. The hook assembly may further include a mounting portion in which the first magnetic structure is disposed and configured to be connected to the mounting groove, and a connecting portion connected to the mounting portion and at least partially disposed inside the cover body. The connecting portion may include a base member, and a connecting member having one end connected to the base member and another end connected to the cover body, including an elastic material, and configured to apply an elastic force between the base member and the cover body. When the accessory is mounted to the case, a position of the accessory may be switchable between a first position in which the accessory is separable from the case and a second position in which the accessory is fixed to the case.

### BRIEF DESCRIPTION OF DRAWINGS

The foregoing and other aspects, features, and advantages of embodiments of the present disclosure will become more apparent from the following detailed description with reference to the accompanying drawings.
FIG. 1 is a block diagram illustrating an electronic device in a network environment according to an embodiment.
FIG. 2A is a perspective view of an electronic device viewed from one direction according to an embodiment.
FIG. 2B is a perspective view of an electronic device viewed from another direction according to an embodiment.
FIG. 3A is a diagram illustrating an accessory module mounted to an electronic device according to an embodiment.
FIG. 3B is a diagram illustrating an accessory in a first position relative to a case according to an embodiment.
FIG. 3C is a diagram illustrating an accessory in a second position relative to a case according to an embodiment.
FIG. 4A is a perspective view of a case according to an embodiment.
FIG. 4B is an exploded perspective view of a case according to an embodiment.
FIG. 4C is a cross-sectional view along an A-A' line of FIG. 4A.
FIG. 5A is an exploded perspective view of a hook assembly according to an embodiment.
FIG. 5B is a perspective view of a hook assembly according to an embodiment.
FIG. 5C is a cross-sectional view along a B-B' line of FIG. 5B.
FIG. 6A is a diagram illustrating a guide magnetic structure disposed in a case according to an embodiment.
FIG. 6B is a diagram illustrating a guide magnetic structure disposed in a case according to an embodiment.

### MODE FOR CARRYING OUT THE INVENTION

Hereinafter, the examples will be described in detail with reference to the accompanying drawings. When describing the embodiments with reference to the accompanying drawings, like reference numerals refer to like elements and a repeated description related thereto will be omitted.

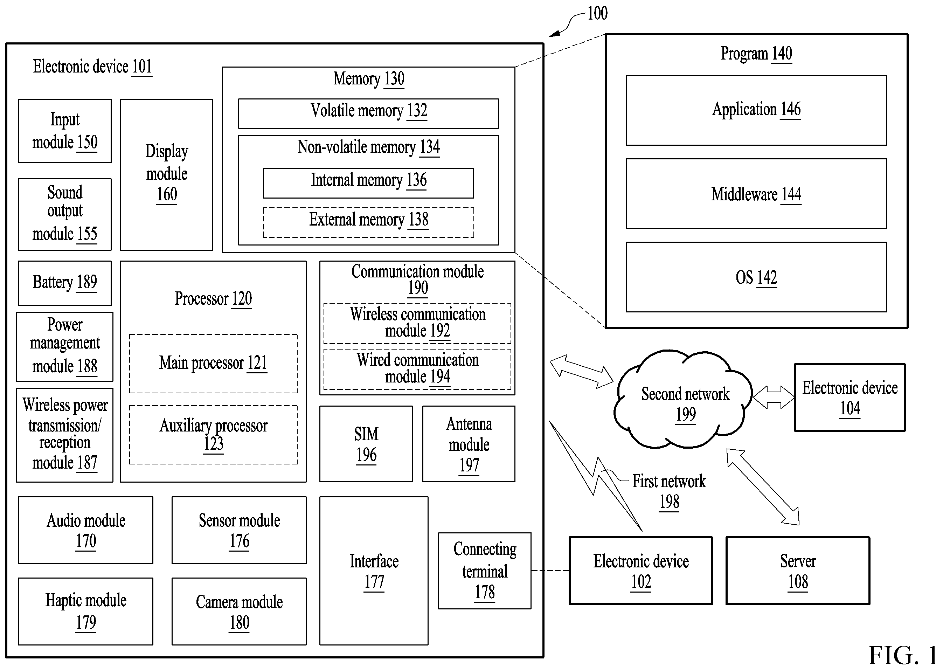

FIG. 1 is a block diagram illustrating an electronic device in a network environment according to an embodiment. Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some examples, at least one (e.g., the connecting terminal 178) of the above components may be omitted from the electronic device 101, or one or more other components may be added to the electronic device 101. In some examples, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., an NPU) may include a hardware structure specified for artificial intelligence (AI) model processing. The AI model may be generated by machine learning. Such learning may be performed by, for example, the electronic device 101 in which an AI model is executed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell that is not rechargeable, a secondary cell that is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104, or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more external electronic devices (e.g., the external devices 102 and 104, and the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra-low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic device is not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various example embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the foldable electronic device 101). For example, a processor (e.g., the processor 120) of the machine (e.g., the foldable electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

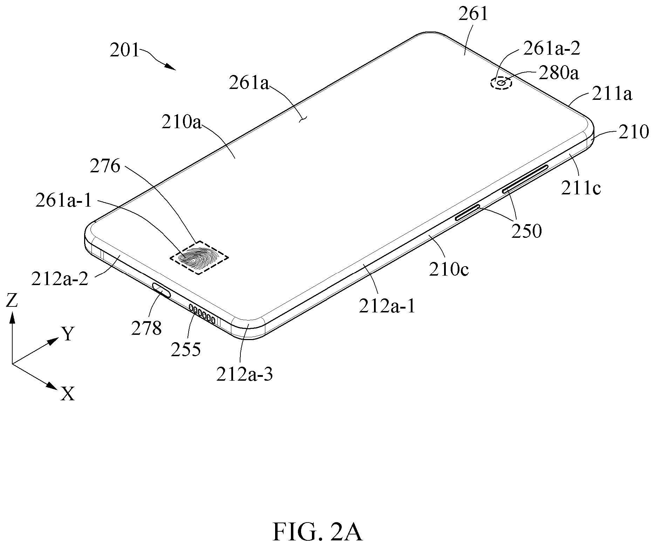

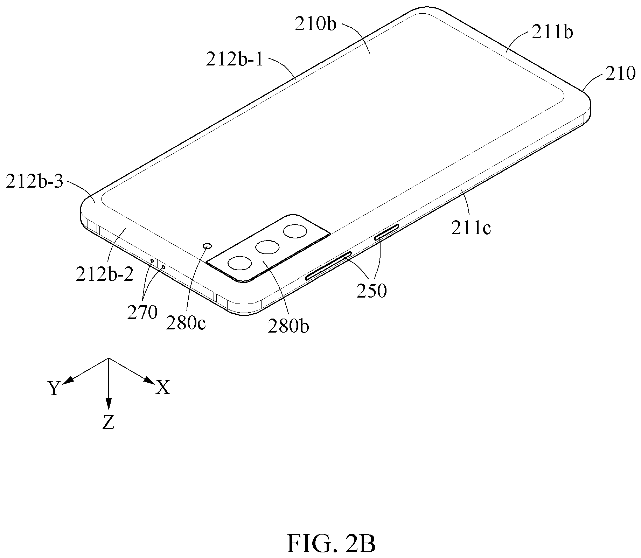

FIG. 2A is a perspective view of an electronic device viewed from one direction according to an embodiment, and FIG. 2B is a perspective view of an electronic device viewed from another direction according to an embodiment.

Referring to FIGS. 2A and 2B, an electronic device 201 (e.g., the electronic device 101 of FIG. 1) may include a housing 210 including a first surface 210a (e.g., a front surface), a second surface 210b (e.g., a rear surface), and a third surface 210c (e.g., a side surface) surrounding a space between the first surface 210a and the second surface 210b.

In an embodiment, the first surface 210a may be formed by a first plate 211a of which at least a portion is substantially transparent. For example, the first plate 211a may include a polymer plate or a glass plate including at least one coating layer. In an embodiment, the second surface 210b may be formed by a second plate 211b that is substantially opaque. For example, the second plate 211b may be formed of coated or tinted glass, ceramic, polymer, metal (e.g., aluminum, stainless steel (STS) or magnesium), or a combination thereof. In an embodiment, the third surface 210c may be formed by a frame 211c that is coupled to the first plate 211a and the second plate 211b and that includes a metal and/or a polymer. In an embodiment, the second plate 211b and the frame 211c may be integrally and seamlessly formed. In an embodiment, the second plate 211b and the frame 211c may be formed of substantially the same material (e.g., aluminum).

In an embodiment, the first plate 211a may include a plurality of first edge areas 212a-1. The plurality of first edge areas 212a-1 may face the second plate 211b from at least a portion of the first surface 210a. The plurality of first edge areas 212a-1 may contact the frame 211c. The plurality of first edge areas 212a-1 may extend in one direction (e.g., a +/-Y direction). The first plate 211a may include a plurality of second edge areas 212a-2. The plurality of second edge areas 212a-2 may face the second plate 211b from at least a portion of the first surface 210a. The plurality of second edge areas 212a-2 may contact the frame 211c. The plurality of second edge areas 212a-2 may extend in another direction (e.g., a +/-X direction) different from the extending direction (e.g., the +/-Y direction) of the plurality of first edge areas 212a-1. The first plate 211a may include a plurality of third edge areas 212a-3. The plurality of third edge areas 212a-3 may face the second plate 211b from at least a portion of the first surface 210a. The plurality of third edge areas 212a-3 may contact the frame 211c. The plurality of third edge areas 212a-3 may be arranged between the plurality of first edge areas 212a-1 and the plurality of second edge areas 212a-2.

In an embodiment, the second plate 211b may include a plurality of fourth edge areas 212b-1. The plurality of fourth edge areas 212b-1 may face the first plate 211a from at least a portion of the second surface 210b. The plurality of fourth edge areas 212b-1 may contact the frame 211c. The plurality of fourth edge areas 212b-1 may extend in one direction (e.g., the +/-Y direction). The second plate 211b may include a plurality of fifth edge areas 212b-2. The plurality of fifth edge areas 212b-2 may face the first plate 211a from at least a portion of the second surface 210b. The plurality of fifth edge areas 212b-2 may contact the frame 211c. The plurality of fifth edge areas 212b-2 may extend in another direction (e.g., the +/-X direction) that is different from the extending direction (e.g., the +/-Y direction) of the plurality of fourth edge areas 212b-1. The second plate 211b may include a plurality of sixth edge areas 212b-3. The plurality of sixth edge areas 212b-3 may face the first plate 211a from at least a portion of the second surface 210b. The plurality of sixth edge areas 212b-3 may contact the frame 211c. The plurality of sixth edge areas 212b-3 may be arranged between the plurality of fourth edge areas 212b-1 and the plurality of fifth edge areas 212b-2.

In an embodiment, the electronic device 201 may include a display 261 (e.g., the display module 160 of FIG. 1). In an embodiment, the display 261 may be positioned on the first surface 210a. In an embodiment, the display 261 may be visible through at least a portion (e.g., the plurality of first edge areas 212a-1, the plurality of second edge areas 212a-2, and/or the plurality of third edge areas 212a-3) of the first plate 211a. In an embodiment, the display 261 may have a shape that is substantially the same as the shape of an outer edge of the first plate 211a. In an embodiment, an edge of the display 261 may substantially be the same as the outer edge of the first plate 211a.

In an embodiment, the display 261 may include a touch sensing circuit, a pressure sensor for measuring an intensity (pressure) of a touch, and/or a digitizer for detecting a magnetic-type stylus pen.

In an embodiment, the display 261 may include a screen display area 261a that is visually exposed and displays content through a pixel. In an embodiment, the screen display area 261a may include a sensing area 261a-1. The sensing area 261a-1 may overlap at least a portion of the screen display area 261a. The sensing area 261a-1 may allow the transmission of an input signal related to a sensor module 276 (e.g., the sensor module 176 of FIG. 1). The sensing area 261a-1 may display content, like the screen display area 261a that does not overlap the sensing area 261a-1. For example, the sensing area 261a-1 may display content while the sensor module 276 is not operating. At least a portion of a camera area 261a-2 may overlap the screen display area 261a. In an embodiment, the screen display area 261a may include the camera area 261a-2. The camera area 261a-2 may allow the transmission of an optical signal related to a first camera module 280a (e.g., the camera module 180 of FIG. 1). At least a portion of the camera area 261a-2 that overlaps the screen display area 261a may display content, like the screen display area 261a that does not overlap the camera area 261a-2. For example, the camera area 261a-2 may display content while the first camera module 280a is not operating.

In an embodiment, the electronic device 201 may include an audio module 270 (e.g., the audio module 170 of FIG. 1). In an embodiment, the audio module 270 may be positioned on the third surface 210c. In an embodiment, the audio module 270 may obtain sound through at least one hole.

In an embodiment, the electronic device 201 may include the sensor module 276. In an embodiment, the sensor module 276 may be positioned on the first surface 210a. The sensor module 276 may form the sensing area 261a-1 in at least a portion of the screen display area 261a. The sensor module 276 may receive an input signal transmitted through the sensing area 261a-1 and generate an electrical signal based on the received input signal. For example, the input signal may have a designated physical quantity (e.g., heat, light, temperature, sound, pressure, or ultrasound). For example, the input signal may include a signal related to biometric information (e.g., a fingerprint) of a user.

In an embodiment, the electronic device 201 may include the first camera modules 280a (e.g., the camera module 180 of FIG. 1). In an embodiment, the first camera module 280a may be positioned on the first surface 210a. In an embodiment, at least a portion of the first camera module 280a may be positioned below the display 261. In an embodiment, the first camera module 280a may receive an optical signal transmitted through the camera area 261a-2.

In an embodiment, the electronic device 201 may include a second camera module 280b (e.g., the camera module 180 of FIG. 2). The second camera module 280b may be positioned on the second surface 210b. In an embodiment, the second camera module 280b may include a plurality of camera modules (e.g., a dual camera, a triple camera, or a quad camera).

In an embodiment, the electronic device 201 may include a flash 280c. The flash 280c may be positioned on the second surface 210b. In an embodiment, the flash 280c may include a light-emitting diode or a xenon lamp.

In an embodiment, the electronic device 201 may include a sound output module 255 (e.g., the sound output module 155 of FIG. 1). In an embodiment, the sound output module 255 may be positioned on the third surface 210c. In an embodiment, the sound output module 255 may include one or more holes.

In an embodiment, the electronic device 201 may include an input module 250 (e.g., the input module 150 of FIG. 1). In an embodiment, the input module 250 may be positioned on the third surface 210c. In an embodiment, the input module 250 may include at least one key input device.

In an embodiment, the electronic device 201 may include a connecting terminal 278 (e.g., the connecting terminal 178 of FIG. 1). In an embodiment, the connecting terminal 278 may be positioned on the third surface 210c. For example, when the electronic device 201 is viewed from one direction (e.g., the +Y direction), the connecting terminal 278 may be substantially positioned in a central portion of the third surface 210c, and the sound output module 255 may be positioned on one side (e.g., a right side) with respect to the connecting terminal 278.

In an embodiment, the electronic device 201 may include a support body 240, a first circuit board 251, a second circuit board 252, and a battery 289 (e.g., the battery 189 of FIG. 1). At least a portion of the support body 240 may form the housing 210 together with the first plate 211a and the second plate 211b.

In an embodiment, the support body 240 may include a first frame structure 241, a second frame structure 243, and a plate structure 242. The first frame structure 241 may surround an edge of the plate structure 242. The first frame structure 241 may connect the edge of the first plate 211a and the edge of the second plate 211b. The first frame structure 241 may surround a space between the first plate 211a and the second plate 211b. At least a portion of the first frame structure 241 may form the third surface 210c of the electronic device 201. The second frame structure 243 may be positioned between the first frame structure 241 and the second plate 211b. The first frame structure 241 and the second frame structure 243 may at least partially form the frame 211c. The plate structure 242 may include a first portion 242a that accommodates the first circuit board 251 and a second portion 242b that accommodates the second circuit board 252. The display 261 may be positioned on one surface (e.g., a bottom surface or a +Z-axis direction) of the plate structure 242. The first circuit board 251 and the second circuit board 252 may be positioned on another surface (e.g., a top surface or a -Z-axis direction) of the plate structure 242. In an embodiment, the plate structure 242 may include an opening 245. The opening 245 may be positioned between the first portion 242a and the second portion 242b. The opening 245 may pass through the plate structure 242. The opening 245 may accommodate the battery 289.

Meanwhile, the one or more embodiment(s) set forth herein may also apply to electronic devices having various shapes/forms (e.g., a foldable electronic device, a slidable electronic device, a digital camera, a digital video camera, a tablet, a laptop computer, and other electronic devices), in addition to the electronic device illustrated in FIGS. 2A and 2B.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

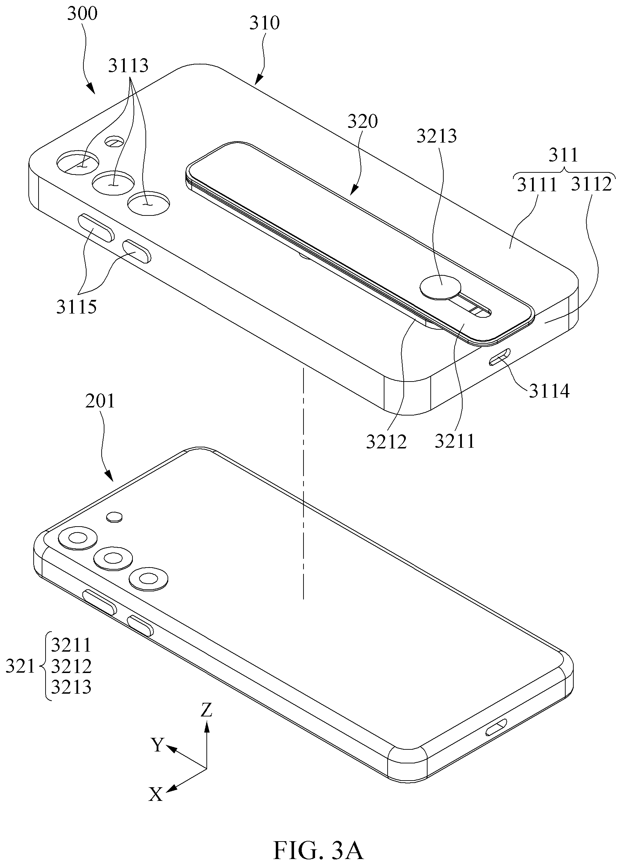

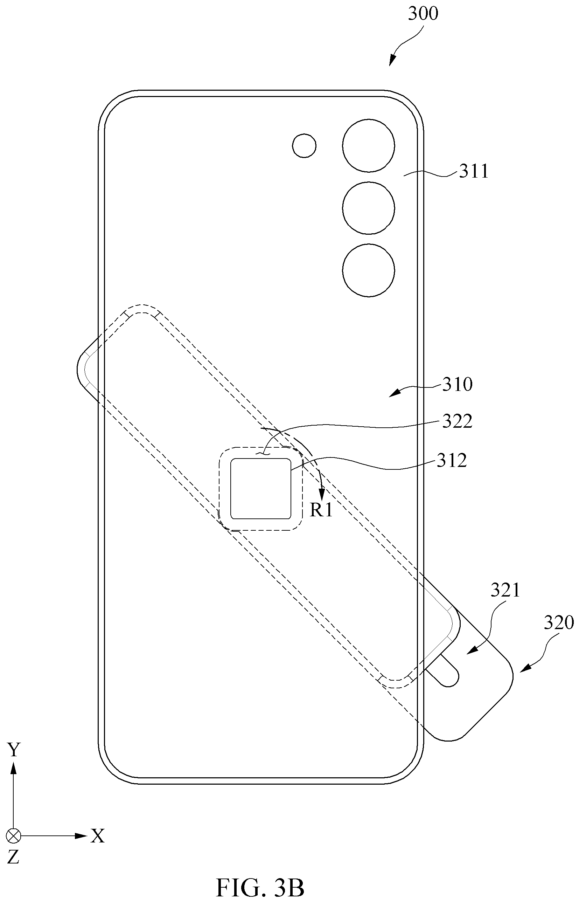

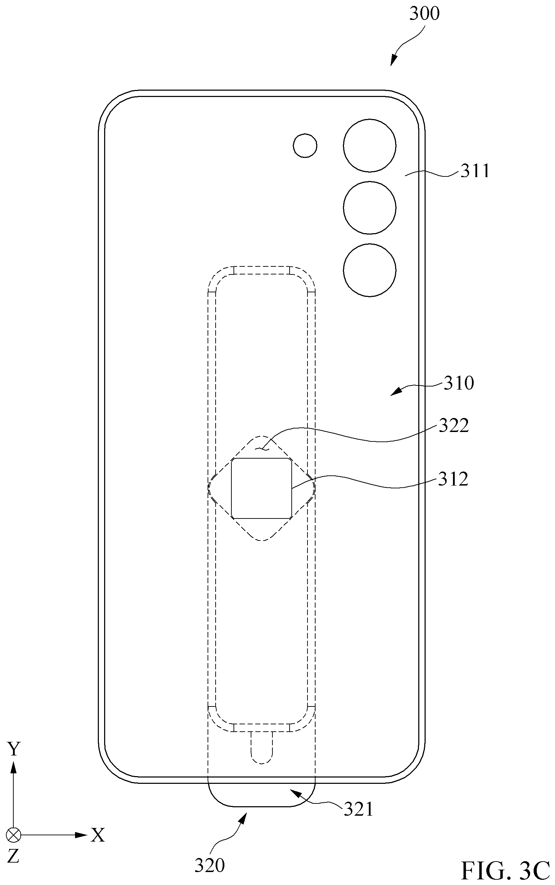

FIG. 3A is a diagram illustrating an accessory module mounted to an electronic device according to an embodiment, FIG. 3B is a diagram illustrating an accessory in a first position relative to a case according to an embodiment, and FIG. 3C is a diagram illustrating an accessory in a second position relative to a case according to an embodiment.

Referring to FIGS. 3A to 3C, an electronic device 201 (e.g., the electronic device 201 of FIG. 2A), according to an embodiment, may include a housing 210 (e.g., the housing 210 of FIG. 2A), a display 261 (e.g., the display 261 of FIG. 2A) disposed on a front surface of the housing 210 and visually exposed to the outside, and an accessory module 300 configured to be mounted to the housing 210. According to an embodiment, the accessory module 300 may be separably mounted to the electronic device 201. In an embodiment, the accessory module 300 may be configured to protect an outer surface of the electronic device 201 while allowing a user to easily grip or secure the electronic device 201 to another structure. In an embodiment, the accessory module 300 may include a case 310 and an accessory 320 that are separably connected to each other.

In an embodiment, the case 310 of the accessory module 300 may be mounted to the outer surface of the electronic device 201 to protect the electronic device 201 from external impact. For example, the case 310 may be mounted to the outer surface of the electronic device 201 to cover a rear surface and side surfaces of the electronic device 201 such that the display 261 of the electronic device 201 is exposed. In an embodiment, the case 310 may include a cover body 311 forming an outer surface of the case 310, an opening 3110 formed in the cover body 311, a hook assembly 312 movably disposed in the opening 3110, a fixing portion 313 disposed inside the cover body 311 along a circumferential direction of the opening 3110, and a guide magnetic structure 314 disposed in the cover body 311.

In an embodiment, the cover body 311 may include a plate-shaped support portion 3111 and a side portion 3112 connected along at least a portion of an edge of the support portion 3111. In an embodiment, when the case 310 is mounted to the outer surface of the electronic device 201, the support portion 3111 may cover the rear surface of the electronic device 201, and the side portion 3112 may cover a side surface of the electronic device 201. In an embodiment, the opening 3110 may be formed in an outer surface of the cover body 311, for example, an outer surface of the support portion 3111. In an embodiment, the guide magnetic structure 314 described below may be disposed on the cover body 311. In an embodiment, the support portion 3111 may include one or more camera exposure holes 3113 through which a camera lens disposed on the rear surface of the electronic device 201 is exposed. In an embodiment, the side portion 3112 may include a terminal hole 3114 corresponding to a connecting terminal (e.g., the connecting terminal 278 of FIG. 2A) formed on a side surface of the electronic device 201 and a button portion 3115 corresponding to a key input device (e.g., the input module 250 of FIG. 2A).

In an embodiment, the guide magnetic structure 314 may magnetically attract the accessory 320 during mounting of the accessory 320 to the case 310 such that the position of the accessory 320 may be aligned. In an embodiment, the guide magnetic structure 314 may be disposed on the cover body 311. In an embodiment, the guide magnetic structure 314 may include one or more magnetic bodies.

In an embodiment, the hook assembly 312 may be connected to a mounting groove 322 of the accessory 320 described below to connect the cover body 311 to the accessory body 321. In an embodiment, the hook assembly 312 may be movably disposed relative to the opening 3110 formed in the cover body 311. In an embodiment, the hook assembly 312 may include a first magnetic structure 3123 that magnetically attracts the accessory 320 and includes one or more magnetic bodies.

In an embodiment, the hook assembly 312 may be mounted to the accessory 320 while the position of the accessory 320 is aligned with the cover body 311 by the guide magnetic structure 314. In an embodiment, the hook assembly 312 may be mounted to the accessory 320 through pop-up locking. In an embodiment, the hook assembly 312 may pop up by a magnetic force generated between the first magnetic structure 3123 embedded in the hook assembly 312 and a second magnetic structure embedded in the accessory 320. In an embodiment, when the hook assembly 312 is mounted to the accessory 320, the accessory 320 may rotate about the hook assembly 312 such that the hook assembly 312 and the accessory 320 are fastened to each other.

In an embodiment, when the accessory 320 is separated from the case 310, the hook assembly 312 may form substantially the same plane (e.g., a plane parallel to the XY plane of FIG. 3A) as the outer surface of the cover body 311. In an embodiment, during mounting of the accessory 320 to the case 310, for example, when the accessory 320 approaches the case 310 by the guide magnetic structure 314 disposed on the cover body 311, the hook assembly 312 may protrude from the outer surface of the cover body 311 and may be connected to the accessory 320 by a magnetic attraction between a first magnetic structure 3123 disposed in the hook assembly 312 and a second magnetic structure disposed in the accessory 320.

In an embodiment, the fixing portion 313 may prevent the hook assembly 312 from being detached from the cover body 311. In an embodiment, the fixing portion 313 may be disposed inside the cover body 311 to surround the opening 3110 formed in the cover body 311 along a circumferential direction. In an embodiment, when the hook assembly 312 is separated from the accessory 320, the fixing portion 313 may prevent the hook assembly 312 from being detached from the outer surface of the cover body 311 in a downward direction (e.g., a -Z-axis direction of FIG. 3A). For example, the fixing portion 313 may prevent the hook assembly 312 from being detached by including a protrusion area 313b configured to overlap the hook assembly 312 when viewed from the outer surface of the case 310.

In an embodiment, the accessory 320 may be detachably connected to the case 310. In an embodiment, the accessory 320 may be mounted to the hook assembly 312 of the case 310. In an embodiment, the accessory 320 may include the accessory body 321, the mounting groove 322 formed in the accessory body 321, and the second magnetic structure disposed in the accessory body 321.

In an embodiment, the accessory body 321 may be directly mounted to the hook assembly 312 of the case 310. In an embodiment, the second magnetic structure may be disposed in the accessory body 321. In an embodiment, the second magnetic structure may magnetically attract the first magnetic structure 3123 disposed in the hook assembly 312. In an embodiment, the accessory body 321 may include a first body portion 3211, a second body portion 3212, and a guide portion 3213.

In an embodiment, the first body portion 3211 of the accessory body 321 may form an outer surface of the accessory body 321. In an embodiment, the second body portion 3212 of the accessory body 321 may be movably connected to the first body portion 3211 by the guide portion 3213 described below. In an embodiment, the mounting groove 322 described below may be formed in the second body portion 3212 of the accessory body 321. In an embodiment, the second magnetic structure may be disposed in the second body portion 3212. In an embodiment, the guide portion 3213 may be formed in the first body portion 3211 and the second body portion 3212. In an embodiment, the guide portion 3213 may guide relative movement between the first body portion 3211 and the second body portion 3212. In an embodiment, the guide portion 3213 may adjust the length of the accessory 320 by movably connecting the first body portion 3211 and the second body portion 3212 along a longitudinal direction of the accessory 320.

In an embodiment, the mounting groove 322 of the accessory 320 may be recessed in the accessory body 321, for example, in the second body portion 3212. In an embodiment, the hook assembly 312 may be mounted to the mounting groove 322. For example, when the accessory 320 is mounted to the case 310 from a separated state, an attractive force may be generated between the accessory 320 and the hook assembly 312 such that the hook assembly 312 may protrude from the outer surface of the cover body 311 and may be connected to the mounting groove 322 of the accessory 320.

In an embodiment, the second magnetic structure of the accessory 320 may be disposed in the accessory body 321, for example, in the second body portion 3212. In an embodiment, the second magnetic structure of the accessory 320 may magnetically attract the guide magnetic structure 314 disposed in the cover body 311 and the first magnetic structure 3123 disposed in the hook assembly 312, respectively. In an embodiment, the position of the accessory 320 relative to the case 310 may be aligned by a magnetic attraction between the second magnetic structure of the accessory 320 and the guide magnetic structure 314 of the case 310. In an embodiment, the hook assembly 312 may be connected to the mounting groove 322 of the accessory 320 by a magnetic attraction between the second magnetic structure of the accessory 320 and the first magnetic structure 3123 of the hook assembly 312.

In an embodiment, a mounting state of the accessory module 300 may change depending on an arrangement state of the accessory 320 relative to the case 310. In an embodiment, the accessory 320 may be mounted to the case 310 in a tilted state in one direction (e.g., at an angle of 45 degrees with respect to a Y-axis). In an embodiment, when the accessory 320 is mounted to the case 310, the position of the accessory 320 may switch between a first position in which the accessory 320 is arranged relative to the case 310, as illustrated in FIG. 3B, and a second position in which the accessory 320 is arranged relative to the case 310, as illustrated in FIG. 3C, when viewed from the outer surface of the case 310.

In an embodiment, when the position of the accessory 320 switches between the first position and the second position, the accessory 320 may rotate about a rotation axis (e.g., an axis parallel to a Z-axis of FIG. 3B) perpendicular to the mounting groove 322. In an embodiment, a mounting state of the accessory module 300 relative to the electronic device 201 may change as the accessory 320 rotates relative to the case 310 in one rotational direction R1 about a rotation axis (e.g., a central axis of the case 310 parallel to the Z-axis of FIG. 3B) while mounted to the case 310. For example, when the accessory 320 is arranged in the first position relative to the case 310, the accessory 320 may be arranged in the second position relative to the case 310 when rotated clockwise. When the accessory 320 is disposed in the second position relative to the case 310, the accessory 320 may be arranged in the first position relative to the case 310 when the accessory 320 rotates counterclockwise.

In an embodiment, a degree of coupling between the case 310 and the accessory 320 may vary depending on a mounting state of the accessory module 300. For example, when the accessory 320 is arranged in the first position (e.g., the position of the accessory 320 in FIG. 3B) relative to the case 310, the accessory 320 and the case 310 may be coupled to be separable from each other. For example, when the accessory 320 is mounted to the case 310 and arranged in the first position, the hook assembly 312 may be positioned in the mounting groove 322 of the accessory 320. When viewed from the outer surface of the case 310, the hook assembly 312 and the mounting groove 322 may have substantially the same shape, and the mounting groove 322 may be positioned to surround the hook assembly 312.

In an embodiment, when the accessory 320 is arranged in the second position (e.g., the position of the accessory 320 in FIG. 3C) relative to the case 310, a mounting state of the accessory 320 relative to the case 310 may be fixed. For example, when the accessory 320 is mounted to the case 310 and arranged in the second position, an edge of the hook assembly 312 may contact an edge of the mounting groove 322, and the hook assembly 312 may be prevented from further rotating in a forward direction by contact between the hook assembly 312 and the edge of the mounting groove 322.

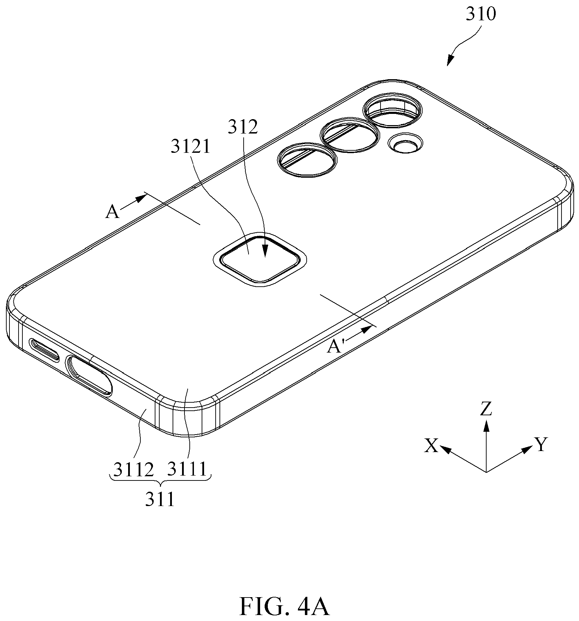

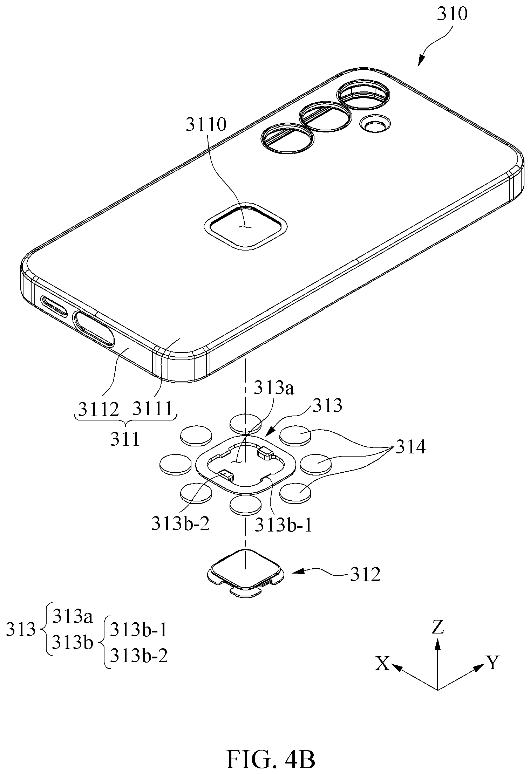

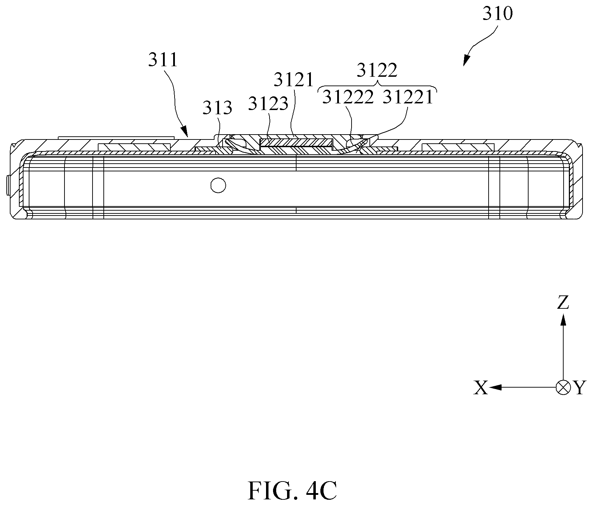

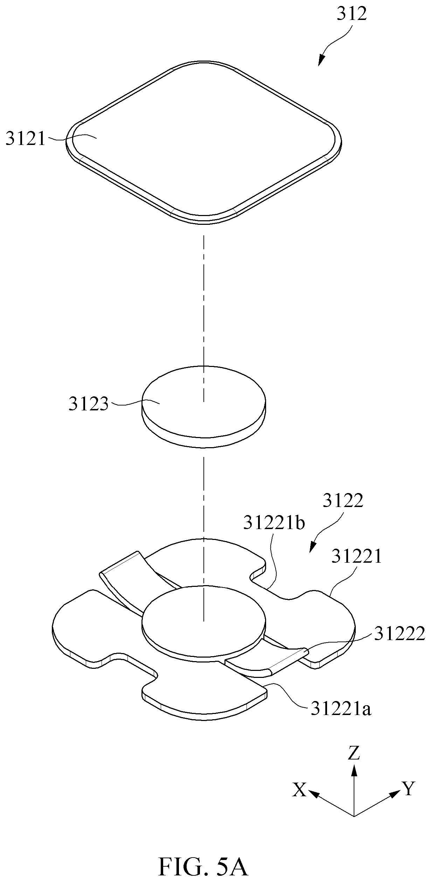

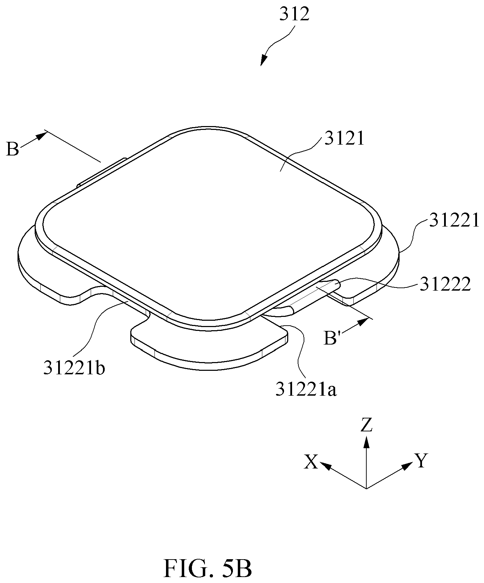

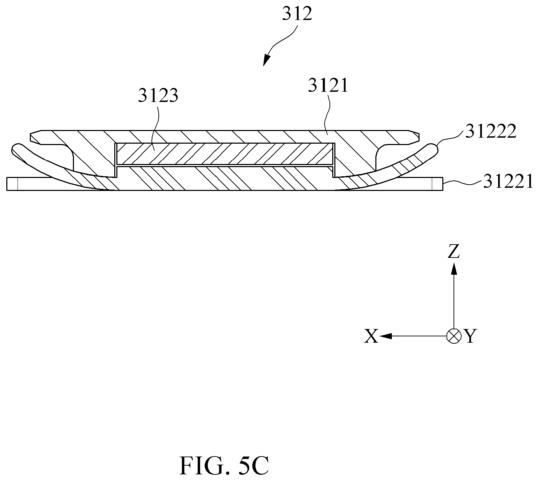

FIG. 4A is a perspective view of a case according to an embodiment, FIG. 4B is an exploded perspective view of a case according to an embodiment, FIG. 4C is a cross-sectional view along an A-A' line of FIG. 4A, FIG. 5A is an exploded perspective view of a hook assembly according to an embodiment, FIG. 5B is a perspective view of a hook assembly according to an embodiment, and FIG. 5C is a cross-sectional view along a B-B' line of FIG. 5B.

Referring to FIGS. 4A to 5C, a case 310, according to an embodiment, may include a cover body 311, an opening 3110, a fixing portion 313, a hook assembly 312, and a guide magnetic structure 314.

In an embodiment, the opening 3110 may be formed in the cover body 311. In an embodiment, the fixing portion 313 may be disposed along a circumferential direction of the opening 3110 in an inner surface (e.g., a surface facing a -Z-axis direction) of the cover body 311. In an embodiment, the hook assembly 312 may be movably disposed in the opening 3110.

In an embodiment, the fixing portion 313 may include an opening area 313a and a protrusion area 313b. In an embodiment, the opening area 313a of the fixing portion 313 may at least partially overlap the opening 3110 formed in an outer surface of the cover body 311. In an embodiment, the protrusion area 313b of the fixing portion 313 may protrude from an inner circumference of the fixing portion 313 to the opening area 313a. In an embodiment, the protrusion area 313b may include a first protrusion portion 313b-1 and a second protrusion portion 313b-2. In an embodiment, the first protrusion portion 313b-1 may overlap at least a portion of the hook assembly 312 when viewed from the outer surface of the cover body 311. In an embodiment, the first protrusion portion 313b-1 may contact at least a portion of the hook assembly 312 when the accessory 320 is separated from the case 310. In an embodiment, the first protrusion portion 313b-1 may prevent the hook assembly 312 from being detached downward (e.g., detached in a -Z-axis direction of FIG. 4B) from the cover body 311. In an embodiment, the second protrusion portion 313b-2 of the protrusion area 313b may be formed in a direction perpendicular to the first protrusion portion 313b-1. For example, when the first protrusion portion 313b-1 protrudes in an X-axis direction from the inner circumference of the fixing portion 313, the second protrusion portion 313b-2 may protrude in a Y-axis direction. In an embodiment, the second protrusion portion 313b-2 may protrude in a shape configured to engage with a base member 31221 of the hook assembly 312 described below.

In an embodiment, the hook assembly 312 may include a mounting portion 3121 and a connecting portion 3122. In an embodiment, a first magnetic structure 3123 including one or more magnetic bodies may be disposed in the mounting portion 3121 of the hook assembly 312. In an embodiment, when the accessory 320 is mounted to the case 310, the mounting portion 3121 of the hook assembly 312 may protrude from the outer surface of the cover body 311 and may be connected to the mounting groove 322 of the accessory 320. In an embodiment, the connecting portion 3122 of the hook assembly 312 may be connected to the mounting portion 3121. In an embodiment, at least a portion of the connecting portion 3122 of the hook assembly 312 may be disposed inside the cover body 311. In an embodiment, the connecting portion 3122 of the hook assembly 312 may include the base member 31221 and a connecting member 31222.

In an embodiment, the base member 31221 may be connected to the cover body 311 by the connecting member 31222 described below. In an embodiment, the base member 31221 may include a first insertion groove 31221a and a second insertion groove 31221b. In an embodiment, the first insertion groove 31221a and the second insertion groove 31221b may be formed in a direction substantially perpendicular to each other. In an embodiment, one end of the connecting member 31222 described below may be connected to the first insertion groove 31221a. In an embodiment, when the hook assembly 312 moves along a moving direction (e.g., a Z-axis direction of FIG. 4B), the second protrusion portion 313b-2 of the fixing portion 313 disposed inside the cover body 311 may be inserted into the second insertion groove 31221b.

In an embodiment, the connecting member 31222 may connect the base member 31221 to the cover body 311. For example, one end of the connecting member 31222 may be connected to the base member 31221, for example, to the first insertion groove 31221a of the base member 31221. The other end of the connecting member 31222 may be connected to the inner surface of the cover body 311. In an embodiment, the connecting member 31222 may include an elastic material. In an embodiment, the connecting member 31222 may apply an elastic force between the base member 31221 and the cover body 311. For example, the connecting member 31222 may apply a restoring force to restore the position of the hook assembly 312 when the hook assembly 312 protrudes from the outer surface of the cover body 311 to the mounting groove 322 of the accessory 320. In an embodiment, the connecting member 31222 may apply an elastic force such that the hook assembly 312 may form substantially the same plane with the outer surface of the cover body 311 when the hook assembly 312 restores the position from the mounting groove 322 of the accessory 320 to the outer surface of the cover body 311. In an embodiment, the connecting member 31222 may be formed integrally with the base member 31221. In an embodiment, the connecting member 31222 may be formed as a member separate from the base member 31221.

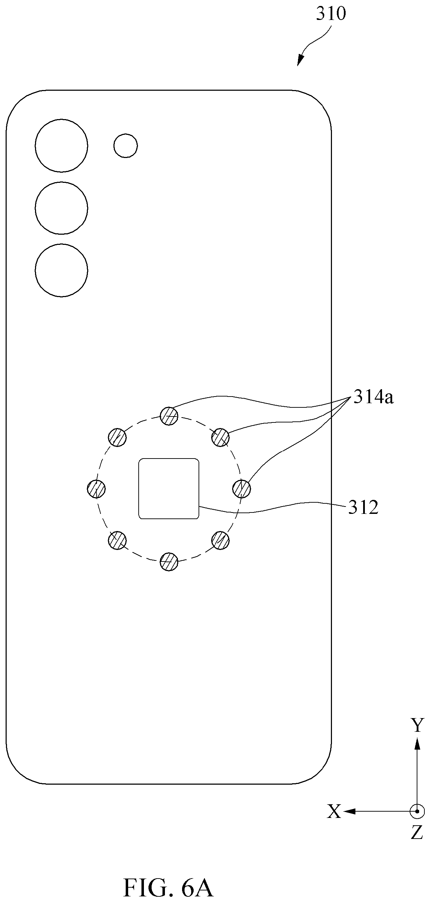

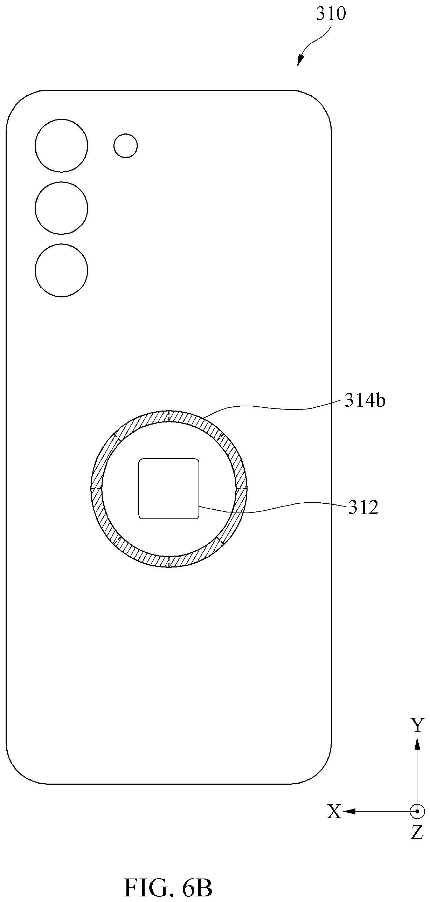

FIG. 6A is a diagram illustrating a guide magnetic structure disposed in a case according to an embodiment, and FIG. 6B is a diagram illustrating a guide magnetic structure disposed in a case according to an embodiment.

Referring to FIGS. 6A and 6B, a case 310, according to an embodiment, may include a cover body (e.g., the cover body 311 of FIG. 3A), a fixing portion (e.g., the fixing portion 313 of FIG. 4B), an opening (e.g., the opening 3110 of FIG. 4B), a hook assembly 312 (e.g., the hook assembly 312 of FIG. 4B), and a guide magnetic structure (e.g., the guide magnetic structure 314 of FIG. 4B).

In an embodiment, a guide magnetic structure 314 (e.g., the guide magnetic structure 314 of FIG. 4B) may be disposed on a cover body 311. In an embodiment, the guide magnetic structure 314 may be disposed along a circumferential direction of the hook assembly 312 on the cover body 311. In an embodiment, the guide magnetic structure 314 may not be exposed to the outside of the cover body 311. For example, the guide magnetic structure 314 may be embedded in the cover body 311.

In an embodiment, the guide magnetic structure 314 may include a plurality of magnetic bodies 314a arranged along the circumferential direction of the hook assembly 312. In an embodiment, each of the plurality of magnetic bodies 314a may magnetically attract a second magnetic structure of the accessory 320. In an embodiment, the plurality of magnetic bodies 314a may be arranged at substantially equal angular intervals (e.g., 45 degrees) along the circumferential direction of the hook assembly 312. In an embodiment, when viewed from an outer surface of the cover body 311, the plurality of magnetic bodies 314a may be arranged such that one of an N pole or an S pole faces the outer surface of the cover body 311. In an embodiment, although the plurality of magnetic bodies 314a is illustrated as including eight magnetic bodies, the number of magnetic bodies 314a is not limited thereto and may vary depending on the embodiment. In an embodiment, when viewed from the outer surface of the cover body 311, the plurality of magnetic bodies 314a may be oriented such that each magnetic body has the same magnetic pole. For example, when a second magnetic structure disposed in the accessory is oriented such that an N pole or an S pole faces the case 310, the plurality of magnetic bodies 314a may be oriented such that S poles or N poles, respectively, face the accessory.

In an embodiment, a guide magnetic structure 314b may include a plurality of areas arranged alternately with opposite magnetic poles along the circumferential direction of the hook assembly 312. For example, the plurality of areas of the guide magnetic structure 314b may be defined at substantially equal angular intervals along the circumferential direction of the hook assembly 312, and at least some of the areas may have an N pole, while remaining areas may have an S pole. In an embodiment, when the accessory 320 is disposed in a first position relative to the case 310, the guide magnetic structure 314b may apply a magnetic force to a second magnetic structure of the accessory 320 such that the position of the accessory 320 switches to a second position. In an embodiment, when the accessory 320 is disposed in the second position relative to the case 310 and a user switches the accessory 320 toward the first position, the guide magnetic structure 314b may apply a magnetic force to the second magnetic structure such that the position of the accessory 320 switches to the first position.

According to an embodiment, an accessory module 300 for an electronic device 201 includes a case 310 configured to be mounted to the electronic device 201 and an accessory 320 detachably connected to the case 310. The case 310 may include a cover body 311 forming an outer surface of the case 310, an opening 3110 formed in the cover body 311, and a hook assembly 312 movably disposed relative to the opening 3110 and including a first magnetic structure 3123. The accessory 320 may include an accessory body 321, a mounting groove 322 recessed in the accessory body 321 such that the hook assembly 312 is mounted to the accessory 320, and a second magnetic structure disposed in the accessory body 321 and configured to magnetically attract the first magnetic structure 3123. When the accessory 320 is mounted to the case 310, a position of the accessory 320 may be switchable between a first position in which the accessory 320 is separable from the case 310 and a second position in which the accessory 320 is fixed to the case 310.

In an embodiment, when the accessory 320 is mounted to the case 310, in the first position, the hook assembly 312 may be positioned in the mounting groove 322 of the accessory 320, and in the second position, the hook assembly 312 may contact an edge of the mounting groove 322.

In an embodiment, when the position of the accessory 320 switches between the first position and the second position, the accessory 320 may rotate about a rotation axis perpendicular to the mounting groove 322.

In an embodiment, when the accessory 320 is separated from the case 310, the hook assembly 312 may form substantially the same plane as an outer surface of the cover body 311, and when the accessory 320 is mounted to the case 310, the hook assembly 312 may protrude from the outer surface of the cover body 311 and may be connected to the mounting groove 322 of the accessory 320.

In an embodiment, the hook assembly 312 may further include a mounting portion 3121 in which the first magnetic structure 3123 is disposed and configured to be connected to the mounting groove 322, and a connecting portion 3122 connected to the mounting portion 3121 and at least partially disposed inside the cover body 311.

In an embodiment, the connecting portion 3122 may include a base member 31221 and a connecting member 31222 having one end connected to the base member 31221 and another end connected to the cover body 311 and including an elastic material, in which the connecting member 31222 may apply an elastic force between the base member 31221 and the cover body 311.

In an embodiment, the base member 31221 may include a first insertion groove 31221a into which one end of the connecting member 31222 is inserted, and a second insertion groove 31221b formed in a direction substantially perpendicular to the first insertion groove 31221a.

In an embodiment, the case 310 may further include a fixing portion 313 disposed on the cover body 311 to surround the opening 3110 along a circumferential direction, in which the fixing portion 313 may include an opening area 313a at least partially overlapping the opening 3110, and a protrusion area 313b protruding from an inner circumference of the fixing portion 313 toward the opening area 313a.

In an embodiment, the protrusion area 313b may, when viewed from the outer surface of the cover body 311, include a first protrusion portion 313b-1 formed to at least partially overlap the connecting member 31222 and configured to contact at least a portion of the connecting member 31222 when the accessory 320 is separated from the case 310, and a second protrusion portion 313b-2 formed to at least partially overlap the second insertion groove 31221b of the base member 31221 and protruding to be inserted into the second insertion groove 31221b.

In an embodiment, the case 310 may further include a guide magnetic structure 314 disposed on the cover body 311, in which the guide magnetic structure 314 may apply a magnetic force to the accessory 320 during mounting of the accessory 320 to the case 310 such that the position of the accessory 320 relative to the case 310 may be aligned.

In an embodiment, the guide magnetic structure 314 may include a plurality of magnetic bodies 314a disposed along a circumferential direction of the hook assembly 312 at substantially equal angular intervals.

In an embodiment, when viewed from the outer surface of the cover body 311, the plurality of magnetic bodies 314a may be oriented to have the same magnetic pole.

In an embodiment, the guide magnetic structure 314b may include a plurality of areas arranged alternately with opposite magnetic poles along a circumferential direction of the hook assembly 312.

In an embodiment, the accessory body 321 may include a first body portion 3211 forming an outer surface of the accessory body 321, a second body portion 3212 movably connected to the first body portion 3211, in which the second magnetic structure is disposed and in which the mounting groove 322 is formed, and a guide portion 3213 configured to guide relative movement between the first body portion 3211 and the second body portion 3212.

In an embodiment, when viewed from the outer surface of the cover body 311, a corner of the hook assembly 312 may be formed with a fillet.

In an embodiment, an electronic device 201 includes a housing including a front surface, a rear surface opposite to the front surface, and a side surface surrounding an inner space between the front surface and the rear surface, a display disposed on the front surface and visually exposed to the outside, and an accessory module 300 configured to be mounted to the electronic device 201. The accessory module 300 may include a case 310 configured to be mounted to a housing and an accessory 320 detachably connected to the case 310. The case 310 may include a cover body 311 forming an outer surface of the case 310, an opening 3110 formed in the cover body 311, and a hook assembly 312 movably disposed relative to the opening 3110 and including a first magnetic structure 3123. The accessory 320 may include an accessory body 321, a mounting groove 322 recessed in the accessory body 321 such that the hook assembly 312 is mounted to the accessory 320, and a second magnetic structure disposed in the accessory body 321 and configured to magnetically attract the first magnetic structure 3123. When the accessory 320 is mounted to the case 310, a position of the accessory 320 may be switchable between a first position in which the accessory 320 is separable from the case 310 and a second position in which the accessory 320 is fixed to the case 310.

In an embodiment, when the accessory 320 is mounted to the case 310, in the first position, the hook assembly 312 may be positioned in the mounting groove 322 of the accessory 320, and in the second position, the hook assembly 312 may contact an edge of the mounting groove 322, when the position of the accessory 320 switches between the first position and the second position, the accessory 320 may rotate about a rotation axis perpendicular to the mounting groove 322, when the accessory 320 is separated from the case 310, the hook assembly 312 may form substantially the same plane as an outer surface of the cover body 311, and when the accessory 320 is mounted to the case 310, the hook assembly 312 may protrude from the outer surface of the cover body 311 and may be connected to the mounting groove 322 of the accessory 320.

In an embodiment, the hook assembly 312 may further include a mounting portion 3121 in which the first magnetic structure 3123 is disposed and configured to be connected to the mounting groove 322, and a connecting portion 3122 connected to the mounting portion 3121 and at least partially disposed inside the cover body 311, the connecting portion 3122 may include a base member 31221 and a connecting member 31222 having one end connected to the base member 31221 and another end connected to the cover body 311 and including an elastic material, in which the connecting member 31222 may apply an elastic force between the base member 31221 and the cover body 311, the base member 31221 may include a first insertion groove 31221a into which one end of the connecting member 31222 is inserted, and a second insertion groove 31221b formed in a direction substantially perpendicular to the first insertion groove 31221a, the case 310 may further include a fixing portion 313 disposed on the cover body 311 to surround the opening 3110 along a circumferential direction, in which the fixing portion 313 may include an opening area 313a at least partially overlapping the opening 3110, and a protrusion area 313b protruding from an inner circumference of the fixing portion 313 toward the opening area 313a, and the protrusion area 313b may, when viewed from the outer surface of the cover body 311, include a first protrusion portion 313b-1 formed to at least partially overlap the connecting member 31222 and configured to contact at least a portion of the connecting member 31222 when the accessory 320 is separated from the case 310, and a second protrusion portion 313b-2 formed to at least partially overlap the second insertion groove 31221b of the base member 31221 and protruding to be inserted into the second insertion groove 31221b.

In an embodiment, the case 310 may further include a guide magnetic structure 314 disposed on the cover body 311, in which the guide magnetic structure 314 may apply a magnetic force to the accessory 320 during mounting of the accessory 320 to the case 310 such that the position of the accessory 320 relative to the case 310 may be aligned, and the guide magnetic structure 314 may include a plurality of magnetic bodies 314a disposed along a circumferential direction of the hook assembly 312 at substantially equal angular intervals.

In an embodiment, an accessory module 300 for an electronic device 201 includes a case 310 configured to be mounted to the electronic device 201 and an accessory 320 detachably connected to the case 310, in which the case 310 may include a cover body 311 forming an outer surface of the case 310, an opening 3110 formed in the cover body 311, a hook assembly 312 movably disposed relative to the opening 3110 and including a first magnetic structure 3123, and a guide magnetic structure 314 disposed on the cover body 311 and configured to apply a magnetic force during mounting of the accessory 320 to the case 310 such that a position of the accessory 320 may be aligned. The accessory 320 may include an accessory body 321, a mounting groove 322 recessed in the accessory body 321 such that the hook assembly 312 is mounted to the accessory 320, and a second magnetic structure disposed in the accessory body 321 and configured to magnetically attract the first magnetic structure 3123. The hook assembly 312 may further include a mounting portion 3121 in which the first magnetic structure 3123 is disposed and configured to be connected to the mounting groove 322, and a connecting portion 3122 connected to the mounting portion 3121 and at least partially disposed inside the cover body 311. The connecting portion 3122 may include a base member 31221 and a connecting member 31222 having one end connected to the base member 31221 and another end connected to the cover body 311 and including an elastic material, in which the connecting member 31222 may apply an elastic force between the base member 31221 and the cover body 311. When the accessory 320 is mounted to the case 310, a position of the accessory 320 may be switchable between a first position in which the accessory 320 is separable from the case 310 and a second position in which the accessory 320 is fixed to the case 310.

## Claims

1. An accessory module (300) for an electronic device (201), the accessory module (300) comprising:
a case (310) configured to be mounted to the electronic device (201); and
an accessory (320) detachably connected to the case (310),
wherein the case (310) comprises:
a cover body (311) forming an outer surface of the case (310);
an opening (3110) formed in the cover body (311); and
a hook assembly (312) movably disposed relative to the opening (3110) and comprising a first magnetic structure (3123),
wherein the accessory (320) comprises:
an accessory body (321);
a mounting groove (322) recessed in the accessory body (321) such that the hook assembly (312) is mounted to the accessory (320); and
a second magnetic structure disposed in the accessory body (321) and configured to magnetically attract the first magnetic structure (3123),
wherein, when the accessory (320) is mounted to the case (310), a position of the accessory (320) is switchable between a first position in which the accessory (320) is separable from the case (310) and a second position in which the accessory (320) is fixed to the case (310).

2. The accessory module (300) of claim 1, wherein, when the accessory (320) is mounted to the case (310),
in the first position, the hook assembly (312) is positioned in the mounting groove (322) of the accessory (320), and
in the second position, the hook assembly (312) contacts an edge of the mounting groove (322).

3. The accessory module (300) of claim 1 or 2, wherein, when the position of the accessory (320) switches between the first position and the second position,
the accessory (320) rotates about a rotation axis perpendicular to the mounting groove (322).

4. The accessory module (300) of any one of claims 1 to 3, wherein, when
the accessory (320) is separated from the case (310),
the hook assembly (312) forms substantially the same plane as an outer surface of the cover body (311), and
when the accessory (320) is mounted to the case (310),
the hook assembly (312) protrudes from the outer surface of the cover body (311) and is connected to the mounting groove (322) of the accessory (320).

5. The accessory module (300) of any one of claims 1 to 4, wherein the hook assembly (312) further comprises:
a mounting portion (3121) in which the first magnetic structure (3123) is disposed and configured to be connected to the mounting groove (322); and
a connecting portion (3122) connected to the mounting portion (3121) and at least partially disposed inside the cover body (311).

6. The accessory module (300) of any one of claims 1 to 5, wherein the connecting portion (3122) comprises:
a base member (31221); and
a connecting member (31222) having one end connected to the base member (31221) and another end connected to the cover body (311) and including an elastic material,
wherein the connecting member (31222) applies an elastic force between the base member (31221) and the cover body (311).

7. The accessory module (300) of any one of claims 1 to 6, wherein the base member (31221) comprises:
a first insertion groove (31221a) into which one end of the connecting member (31222) is inserted; and
a second insertion groove (31221b) formed in a direction substantially perpendicular to the first insertion groove (31221a).

8. The accessory module (300) of any one of claims 1 to 7, wherein the case (310) further comprises:
a fixing portion (313) disposed on the cover body (311) to surround the opening (3110) along a circumferential direction,
wherein the fixing portion (313) comprises:
an opening area (313a) at least partially overlapping the opening (3110); and
a protrusion area (313b) protruding from an inner circumference of the fixing portion (313) toward the opening area (313a).

9. The accessory module (300) of any one of claims 1 to 8, wherein the protrusion area (313b), when viewed from the outer surface of the cover body (311), comprises:
a first protrusion portion (313b-1) formed to at least partially overlap the connecting member (31222) and configured to contact at least a portion of the connecting member (31222) when the accessory (320) is separated from the case (310); and
a second protrusion portion (313b-2) formed to at least partially overlap the second insertion groove (31221b) of the base member (31221) and protruding to be inserted into the second insertion groove (31221b).

10. The accessory module (300) of any one of claims 1 to 9, wherein the case (310) further comprises:
a guide magnetic structure (314) disposed on the cover body (311),
wherein the guide magnetic structure (314) applies a magnetic force to the accessory (320) during mounting of the accessory (320) to the case (310) such that the position of the accessory (320) relative to the case (310) is aligned.

11. The accessory module (300) of any one of claims 1 to 10, wherein the guide magnetic structure (314) comprises:
a plurality of magnetic bodies (314a) disposed along a circumferential direction of the hook assembly (312) at substantially equal angular intervals.

12. The accessory module (300) of any one of claims 1 to 11, wherein, when viewed from the outer surface of the cover body (311), the plurality of magnetic bodies (314a) is oriented to have the same magnetic pole.

13. The accessory module (300) of any one of claims 1 to 12, wherein the guide magnetic structure (314b) comprises a plurality of areas arranged alternately with opposite magnetic poles along a circumferential direction of the hook assembly (312).

14. The accessory module (300) of any one of claims 1 to 13, wherein the accessory body (321) comprises:
a first body portion (3211) forming an outer surface of the accessory body (321);
a second body portion (3212) movably connected to the first body portion (3211), in which the second magnetic structure is disposed and in which the mounting groove (322) is formed; and
a guide portion (3213) configured to guide relative movement between the first body portion (3211) and the second body portion (3212).

15. The accessory module (300) of any one of claims 1 to 14, wherein, when viewed from the outer surface of the cover body (311), a corner of the hook assembly (312) is formed with a fillet.
